# EUROPEAN PATENT APPLICATION

(11) **EP 4 297 455 A1**
(43) Date of publication of application: **27.12.2023**
(21) Application number: 22792034.5
(22) Date of filing: 20.04.2022
(51) Int. Cl.: H04W 12/06, H04W 12/04, H04W 12/03, H04W 48/02

(54) **METHOD AND DEVICE FOR AUTHENTICATING NETWORK ACCESS REQUEST THROUGH TERMINAL-TO-TERMINAL CONNECTION IN MOBILE COMMUNICATION SYSTEM**

(30) Priority: 20.04.2021 KR 20210051292
(71) Applicant: Samsung Electronics Co., Ltd., Suwon-si, Gyeonggi-do 16677 (KR)
(72) Inventor: LEE, Jicheol, Suwon-si Gyeonggi-do 16677 (KR); SON, Jungje, Suwon-si Gyeonggi-do 16677 (KR); LEE, Duckey, Suwon-si Gyeonggi-do 16677 (KR)
(74) Representative: Nederlandsch Octrooibureau
(86) International application number: PCT/KR2022/005673
(87) International publication number: WO 2022/225335

(57) **Abstract**

The present disclosure relates to a 5G or 6G communication system for supporting a higher data transmission rate. A method performed by an access and mobility management function (AMF) in a wireless communication system according to an embodiment of the present disclosure comprises: receiving, from a relay user equipment (LTE) for a LTE-network relay communication, a relay key request message including an identifier of a remote UE for the LTE-network relay communication; identifying whether the relay UE is authorized to provide a LTE-network relay service; identifying an authentication server function (AUSF) related to the remote UE, based on the identifier of the remote UE; transmitting, to the AUSF, an authentication request message including the identifier of the remote UE; in case that an authentication procedure for the remote UE based on the identifier of the remote UE is successfully performed, acquiring a proximity-based services (ProSe) session encryption key established between the remote UE and the relay UE; and transmitting, to the relay UE, the ProSe session encryption key.

## Description

### [Technical Field]

The disclosure relates to a method of authenticating a UE, which makes a request for access, and managing a right when a request for accessing a mobile communication network through another UE based on direct communication between UEs is made within a mobile communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 preprocessing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UEsatellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on LTE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing endto-end AI support functions, and next-generation distributed computing technology for implementing services at levels of complexity exceeding the limit of LTE operation capability by utilizing ultra-high-performance communication and computing resources.

### [Disclosure of Invention]

### [Technical Problem]

The disclosure proposes a method of authenticating a UE requesting for accessing a mobile communication network, access authorization, and managing the generation of a security connection between LTEs when the LTE is to access the mobile communication network through another LTE using direct communication between LTEs within a mobile communication system.

### [Solution to Problem]

According to an embodiment of the disclosure, a method performed by an access and mobility management function (AMF) in a wireless communication system is provided. The method includesreceiving, from a relay user equipment (UE) for a UE-network relay communication, a relay key request message including an identifier of a remote UE for the UE-network relay communication; identifying whether the relay UE is authorized to provide a UE-network relay service; identifying an authentication server function (AUSF) related to the remote UE, based on the identifier of the remote UE; transmitting, to the AUSF, an authentication request message including the identifier of the remote UE; in case that an authentication procedure for the remote UE based on the identifier of the remote UE is successfully performed, acquiring a proximity-based services (ProSe) session encryption key established between the remote UE and the relay UE; and transmitting, to the relay UE, the ProSe session encryption key.

According to an embodiment of the disclosure, a method performed by AUSF in a wireless communication system is provided. The method includes receiving, from an AMF, an authentication request message including an identifier of a remote LTE for a LTE-network relay communication; acquiring an authentication vector for the remote LTE from a unified data management (UDM), based on the identifier of the remote LTE; performing an authentication procedure for the remote UE, based on the authentication vector; and generating an encryption key shared between the remote LTE and the AUSF, based on the authentication procedure for the remote UE. The AUSF is related to the remote LTE and is identified based on the identifier of the remote UE.

According to an embodiment of the disclosure, an AMF in a wireless communication system is provided. The AMF includes a transceiver and a controller. The controller is configured to control the transceiver to receive, from a relay UE for a UE-network relay communication, a relay key request message including an identifier of a remote UE for the UE-network relay communication, identify whether the relay UE is authorized to provide a UE-network relay service, identify an AUSF related to the remote LTE, based on the identifier of the remote UE, transmit, to the AUSF, an authentication request message including the identifier of the remote UE, in case that an authentication procedure for the remote UE based on the identifier of the remote LTE is successfully performed, acquire a ProSe session encryption key established between the remote LTE and the relay LTE, and control the transceiver to transmit, to the relay UE, the ProSe session encryption key.

According to an embodiment of the disclosure, an AUSF in a wireless communication is provided. The AUSF includes a transceiver and a controller. The controller is configured to control the transceiver to receive, from an AMF, an authentication request message including an identifier of a remote LTE for a LTE-network relay communication, acquire an authentication vector for the remote UE from a UDM, based on the identifier of the remote LTE, perform an authentication procedure for the remote UE, based on the authentication vector, and generate an encryption key shared between the remote LTE and the AUSF, based on the authentication procedure for the remote UE. The AUSF is related to the remote LTE and is identified based on the identifier of the remote UE.

### [Advantageous Effects of Invention]

According to an embodiment of the disclosure, an authentication of a network access request through the connection between UEs can be effectively performed.

### [Brief Description of Drawings]

FIG. 1 illustrates the structure of a 5G mobile communication system according to an embodiment of the disclosure.
FIG. 2 is a sequence diagram illustrating a procedure in which a UE generates an encryption key for direct communication between LTEs according to an embodiment of the disclosure.
FIG. 3 is a sequence diagram illustrating a procedure of authenticating the UE and generating an encryption key according to an embodiment of the disclosure.
FIG. 4 is a sequence diagram illustrating a direct connection between UEs and a network permission procedure using a temporary identifier of the LTE according to an embodiment of the disclosure.
FIG. 5 is a sequence diagram illustrating a procedure of making a direct connection between LTEs and obtaining network authorization through authentication by the LTE according to an embodiment of the disclosure.
FIG. 6 is a sequence diagram illustrating a procedure of establishing direct connection between UEs and generating an encryption key using a temporary identifier of the UE according to an embodiment of the disclosure
FIG. 7 illustrates a structure of a UE according to an embodiment of the disclosure.
FIG. 8 illustrates a structure of the BS according to an embodiment of the disclosure.
FIG. 9 illustrates a structure of the AMF according to an embodiment of the disclosure.
FIG. 10 illustrates a structure of a core network entity according to an embodiment of the disclosure.

### [Mode for the Invention]

In describing embodiments of the disclosure, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Further, the size of each element does not completely reflect the actual size. In the drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card.

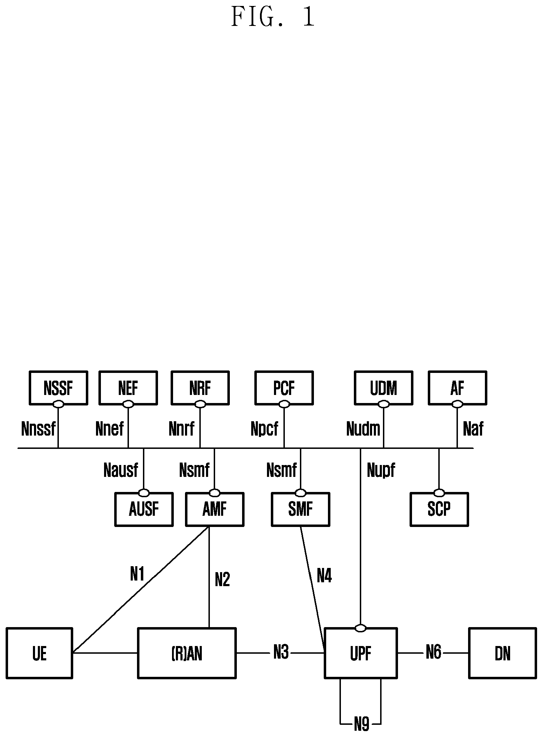

FIG. 1 illustrates the structure of a 5G mobile communication system according to an embodiment of the disclosure.

The unit of each function in a core network of a 5G mobile communication system may be defined as a network function (NF). The structure of the 5G mobile communication network is illustrated in FIG. 1. Representative NFs may include an access and mobility management function (AMF) which manages network access and mobility of a user equipment (UE), a session management function (SMF) performing a function related to a session for the UE, a user plane function (UPF) serving to transmit user data and controlled by the SMF, a network exposure function (NEF) providing information on the UE to a 5G network device and another external server, a unified data management (UDM) and unified data repository (UDR) for storing and managing data, a policy and control function (PCF) managing a policy, an authentication server function (AUSF) authenticating the LTE in a 3GPP access network and a non-3GPP access network, and a data network (DN) such as the Internet in which user data is transmitted. LTE session information may include quality of service (QoS) information, charging information, and information on packet processing.

The AMF of the 5G network system may include a security anchor function (SEAF) performing a function related to security of the UE. The 5G network system may further include a base station, a network slice selection function (NSSF), and a network repository function (NRF).

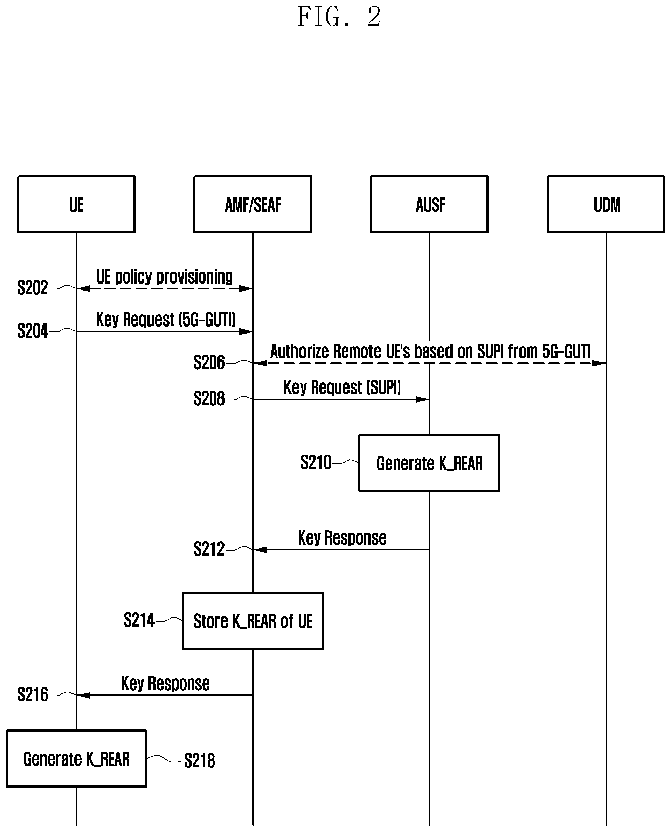

FIG. 2 is a sequence diagram illustrating a procedure in which a UE generates an encryption key for direct communication between UEs according to an embodiment of the disclosure.

In the disclosure, direct communication between UEs may include device-to-device (D2D) communication, proximity-based services (ProSe), and the like, but the scope of the disclosure is not limited by the listed terms.

In S202, the LTE may receive policies required for using the network by the UE from the AMF. At this time, the policies required by the UE to use the network may include at least one piece of information indicating whether direct communication between UEs is supported, information indicating whether a UE-to-network (NW) relay operation using direct communication between UEs can be performed, and information required for configuring a connection of direct communication between UEs.

In S204, the LTE may transmit a request message (for example, a key request) for generating an encryption key required for direct communication between UEs to the AMF. At this time, the UE may insert a temporary identifier (for example, a 5G globally unique temporary identifier (GUTI)) of the UE allocated after a network registration procedure is performed into the key request.

A registration request message which the UE transmits to the AM may be transmitted through a radio access network (RAN) (or a base station or a next generation node B (gNB), hereinafter, interchangeably used) (not shown).

In S206, the AMF may identify a 5G subscriber identifier (for example, a subscription permanent identifier (SUPI)) of a subscriber by using the temporary identifier (5G-GUTI) of the UE included in the key request received from the UE and check whether the UE has completed the correct authentication.

The AMF may identify, from the UDM, information indicating whether the corresponding subscriber is authorized to perform direct communication between UEs and a right to use the same by using the 5G subscriber identifier identified in the 5G-GUTI.

After identifying, from the UDM, that the corresponding UE is a UE allowed to use direct communication between UEs or receiving the right to use the relay service through direct communication between UEs, the AMF may make a request for generating an encryption key (for example, K_REAR) required for the direct communication between UEs to the AUSF by using the 5G subscriber identifier in S208. For example, the AMF may insert the 5G subscriber identifier into a message (for example, a key request) making the request for generating the encryption key (for example, K _REAR) required for direct communication between UEs and transmit the message to the AUSF.

The order of generating encryption keys by the LTE according to an embodiment of the disclosure is described below.
(1) K_AUSF: indicates an encryption key, which is generated when a subscriber performs subscriber authentication through the UE and is shared between the UE and the AUSF. K_AUSF may be generated for each subscriber.
(2) K_REAR: indicates an encryption key for direct communication between UEs which a subscriber uses for direct communication between UEs. K_REAR may be generated using K_AUSF. K_REAR may be generated for each subscriber.
(3) K_ProSe: indicates a session encryption key for direct communication between UEs used to, when a subscriber establishes a direct communication connection with another UE through the UE, protect the connection. K_ProSe may be generated using K_REAR. K _ProSe may be generated for each pair of a subscriber UE and another UE having a connection of direct communication. K _ProSe may be generated whenever a direct connection between UEs is newly established. Keys for encryption and integrity protection of direct connection data between UEs may be separately generated using K_ProSe.

In S210, when receiving a request for generating K_REAR from the AMF, the AUSF may determine input parameters and input constants required for generating K_REAR and generate K_REAR by using K_AUSF generated when the UE is authenticated on the basis of the input parameters and the input constants. The input parameters input when K_REAR is generated may include at least one of some or all of a random number (RAND) newly determined by the AUSF, an encryption key number updated whenever K _REAR is generated, and 5G subscriber identifier of the UE. Further, the input parameters may include other values which have not been mentioned above. The input constants input when K_REAR is generated may include a value or a character string negotiated in advance between the UE and the network.

In S212, the AUSF may transfer a response message (for example, a key response), including a value of the input parameter which has not been negotiated in advance with the UE among the input parameters included when K _REAR is generated, an encryption key identifier (K_REAR ID) indicating K_REAR, and K _REAR, to the AMF in response to the key request.

Further, as another embodiment of the disclosure, the AUSF may share K_REAR and K_REAR ID of the UE with the UDM.

In S214, the AMF receiving the key request from the AUSF may keep (store) the included K_REAR and K_REAR ID as encryption information connected to subscriber information of the UE.

In S216, the AMF may transmit the response message (for example, the key response) of the key request to the LTE to inform that K_REAR is successfully generated in the network. At this time, the AMF may insert the input parameters required for generating K_BEAR and the ID of K_REAR received from the AUSF into the key response transmitted to the UE. When there is a method negotiated in advance between the UE and the network for allocation of the K_REAR ID, the K_REAR ID may be omitted in the message.

In S218, the LTE may generate K_BEAR by using the input parameters required for generating K_REAR and the K_REAR ID.

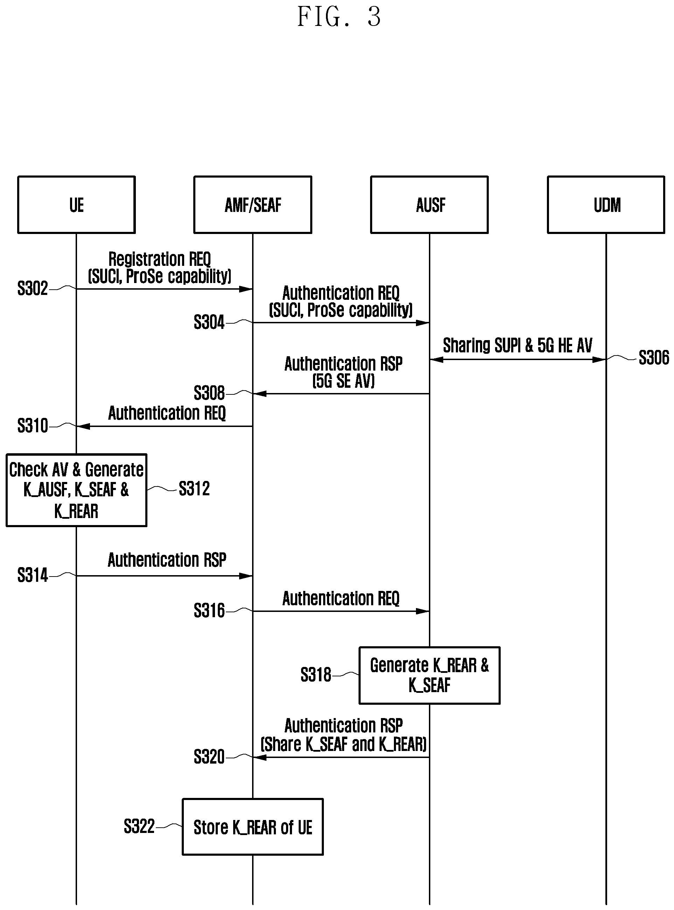

FIG. 3 is a sequence diagram illustrating a procedure of authenticating the UE and generating an encryption key according to an embodiment of the disclosure.

Referring to FIG. 3, a procedure in which the UE generates K_REAR by using a registration procedure of performing registration in a 5G system according to an embodiment of the disclosure is illustrated.

In S302, the UE may transfer a registration request message including at least one of a 5G subscriber identifier and an indicator related to a communication service between UEs to the AMF. At this time, the 5G subscriber identifier may include a non-encrypted subscriber identifier (subscription permanent identifier (SUPI)) or an encrypted subscriber identifier (subscription concealed identifier (SUCI)). The indicator related to the communication service between UEs may include some or all of information indicating whether a communication function between LTEs is included, a request for activating a communication function between UEs, a request for using a communication service between LTEs, a request for a communication service with another UE using a communication function between UEs, and a request for a UE-to-NW relay service using a communication service between UEs.

The registration request message which the UE transmits to the AMF may be transmitted through an RAN (base station) (not shown).

In S304, the AMF may determine whether authentication of a subscriber UE is needed on the basis of the 5G subscriber identifier included in the registration request message. When authentication of the UE is needed, the AMF may transmit an authentication request message (for example, an authentication request) including at least one of the 5G user identifier and the indicator related to the communication service between UEs to the AUSF.

The AUSF may receive the authentication request message from the AMF (SEAF), and the AUSF may make a request for authentication information for the subscriber UE to the UDM in S306. Further, the AUSF may receive a 5G home environment authentication vector (5G HE AV) from the UDM. The AUSF may also receive the SUPI of the UE from the UDM. The AUSF may generate K_AUSF by using information received from the UDM.

In S308, the AUSF may transmit a message (for example, an authentication response) including a 5G serving environment authentication vector (5G SE AV) to the AMF (SEAF).

In S310, the AMF may receive the authentication response from the AUSF and transmit an authentication request message (for example, an authentication request) including information required for identifying authentication of the UE and generating K_AUSF by the UE, such as the RAND and AUTH to the UE.

In S312, the UE may perform operations required for network authentication on the basis of information received from the AMF. At this time, when the network authentication procedure is successful, the UE may generate K_AUSF on the basis thereof. Further, the UE may also generate the encryption key (K_REAR) for direct communication between UEs and other encryption keys, which have not been mentioned, by using K_AUSF.

In S314, after the operation of the network authentication procedure of the UE, the UE may transmit a response message (for example, an authentication response) of the authentication request to the AMF. At this time, the LTE may insert a value of RES* for identifying whether the UE is correctly authenticated in the AUSF into the response message.

In S316, the AMF may insert RES* included in the response message of the LTE into the authentication request message and transfer the authentication request message to the AUSF.

The AUSF may calculate the value of RES*, identify whether the response received from the UE is appropriate, and determine whether authentication of the subscriber UE is successfully authenticated.

The AUSF may transfer a result of identifying the authentication of the UE to the AMF. When the authentication of the UE is successfully performed, the AUSF may generate K _REAR, K_SEAF, and other encryption keys required for the network operation of the UE, which have not been mentioned, in S318, and the AUSF may transfer the same to the AMF in S320. In S322, the AMF may store the encryption keys received from the AUSF.

Further, as another embodiment of the disclosure, the AUSF may share K_REAR with the UDM.

In addition, the AMF may make a request for identifying a right of the subscriber information including information indicating whether the UE allows communication between UEs to the UDM. The AMF may identify the information received from the UDM, insert the information indicating whether the UE allows the communication between UEs into the response message of the authentication request of the UE or the registration request of the UE, and transmit the response message to the UE.

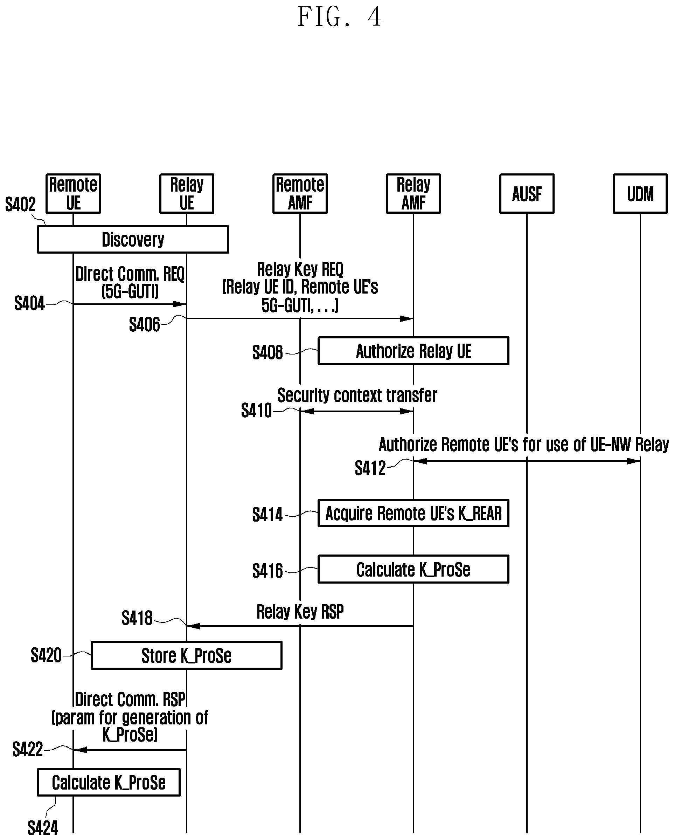

FIG. 4 is a sequence diagram illustrating a direct connection between UEs and a network authorization procedure using a temporary identifier of the LTE according to an embodiment of the disclosure.

The direct connection between UEs and a simplified network authorization procedure using the temporary identifier of the LTE are described with reference to FIG. 4.

UEs to perform direct communication between LTEs according to an embodiment of the disclosure may be referred to as a remote UE and a relay UE. The relay UE may be a UE which provides a network connection to allow the remote UE to be connected to the relay UE through direct communication between LTEs and use a network service through the LTE-to-NW relay service. The remote UE may be a UE which is connected to the relay UE through direct communication between UEs and uses a network service through a UE-to-NW relay service provided by the remote UE.

The remote UE and the relay UE may be authorized in advance for direct communication between UEs, use direct communication between UEs, and receive information, such as a parameter or a policy for the connection to UE-to-NW relay from the network, or relevant information may be preconfigured within the UE. The information may include information such as a service code for the use of UE-to-NW relay. The relay UE may have preconfigured information required for managing direct communication between UEs. Further, the relay LTE may receive information, such as a parameter or a policy for providing a UE-to-NW relay service from the network through direct communication between UEs with other UEs, or the information may be preconfigured in the UE. The relay UE may announce services provided by the relay UE in a discovery procedure so that other UEs can discover the relay LTE to be connected thereto by using preconfigured information.

After the remote UE discovers the relay UE which can provide the UE-to-NW relay service, the remote UE may transmit a message (for example, a direct communication request) making a request for the connection of direct communication between UEs with the relay UE to the relay UE in S402. At this time, the remote UE may insert a 5G-GUTI which was allocated in advance in the network and a service code indicating a request for the UE-to-NW relay service into a direct communication request.

In S406, the relay UE receiving the direct comm. request from the remote UE may identify that the service code corresponds to the request for the UE-to-NW relay service and transmit a message (for example, a relay key request) making a request for authenticating the corresponding service request and a relevant encryption key to the AMF in which the relay UE is registered. Further, the relay LTE may insert the 5G-GUTI of the remote UE received from the remote UE into the relay key request.

In an embodiment of the disclosure, the AMF in which the relay UE is registered may be referred to as a relay AMF, and the AMF in which the remote UE is registered may be referred to as a remote AMF. In S408, the relay AMF may identify whether the relay UE is a LTE which has completed the correct authentication.

In S410, the relay AMF may discover (identify) the remote AMF by using the 5G-GUTI of the remote UE included in the relay key request and identify whether the remote UE is the UE which has completed the correct authentication from the remote AMF. The relay AMF may receive a value of K_REAR and a value of the K_REAR ID of the remote UE from the remote AMF.

In S412, the relay AMF may identify whether the remote UE is a UE which has completed the correct authentication. Thereafter, the relay AMF may identify, from the UDM, information indicating whether the remote UE can use the UE-to-NW relay service provided by the relay UE and a right to use the same by using the SUPI of the remote UE identified from the 5G-GUTI of the remote UE.

As another embodiment of the disclosure, the relay AMF may receive the value of K_REAR and the value of the K_REAR ID of the remote UE from the UDM.

In S414 to S416, the relay AMF may generate (or calculate) a value of the session encryption key (K_ProSe) to be used for the connection of D2D communication between the relay UE and the remote UE from the value of K_REAR of the remote UE.

When generating K_ProSe, the relay AMF may determine input parameters and input constants input when K_ProSe is generated and generate K _ProSe by using the value and K_REAR of the remote UE. The input parameters input when K _REAR is generated may include at least one of some or all of a random number (RAND) newly determined by the relay AMF, an encryption key number updated whenever K_ProSe is generated, and a subscriber ID of the UE. Further, other values which have not been mentioned above may be included. The input constants input when K _ProSe is generated may be preconfigured between the remote UE and the network, or may include a value or a character string which is negotiated therebetween.

In S418, the relay AMF may transfer a response message (for example, a relay key response), including a value of the input parameter which has not been negotiated in advance with the remote UE among the input parameters included when K _ProSe is generated, an encryption key identifier (K_ProSe ID) indicating K _ProSe, and a value of K _ProSe, to the relay UE in response to the relay key request.

In S420, the relay UE receiving the relay key response from the relay AMF may directly use the included K _ProSe and K _ProSe ID for encryption and authentication identification of data exchanged in the connection to the remote UE or generate (or store) encryption keys used for encryption and authentication identification of the data.

In S422, the relay UE may transfer a response message (for example, a direct communication response) informing that the requested connection for direct communication between UEs is successfully established to the remote UE. At this time, the relay UE may insert input parameters input when K _ProSe is generated and the ID of K _ProSe which are information required by the remote UE for generating K _ProSe in K_REAR into the direct communication response among the information received from the relay AMF.

In S424, the remote UE may generate (or calculate) K _ProSe by using the values received from the relay UE.

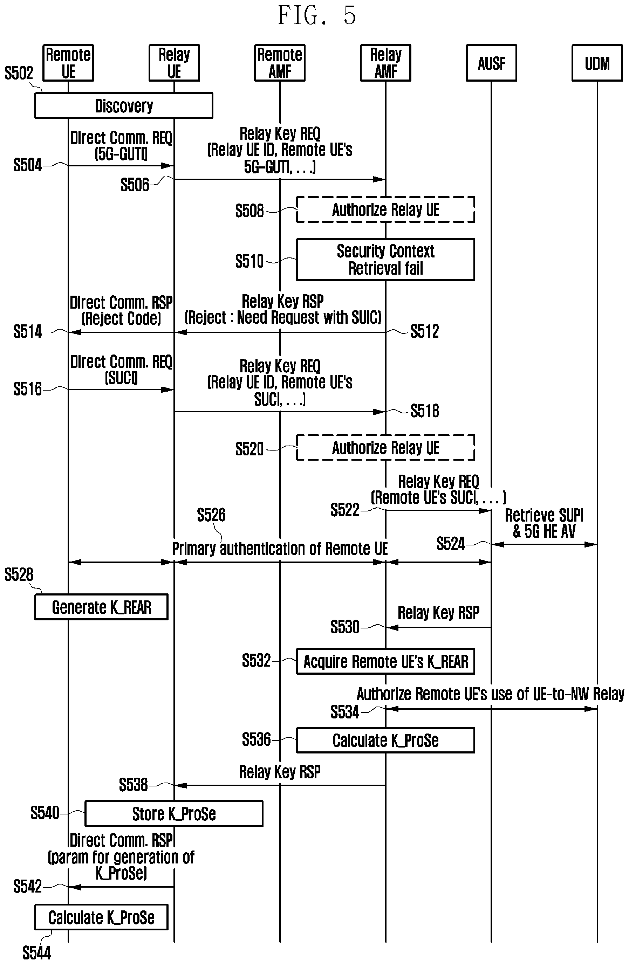

FIG. 5 is a sequence diagram illustrating a direct connection between UEs and a network authorization procedure through authentication of the UE according to an embodiment of the disclosure.

The procedure of establishing a direct connection between LTEs and obtaining network authorization through an NW authentication procedure of the UE is described with reference to FIG. 5.

The remote UE and the relay UE may be authorized in advance for direct communication between UEs, use direct communication between UEs, and receive information, such as a parameter or a policy for the connection to UE-to-NW relay from the network, or relevant information may be preconfigured within the UE. The information may include information such as a service code for using UE-to-NW relay. The relay UE may have preconfigured information required for managing direct communication between UEs. Further, the relay LTE may receive information, such as a parameter or a policy for providing a LTE-to-NW relay service from the network through direct communication between UEs with other UEs, or the information may be preconfigured in the UE. The relay UE may announce services provided by the relay UE in a discovery procedure so that other LTEs can discover the relay LTE to be connected thereto by using preconfigured information.

After the remote UE discovers the relay UE which can provide the UE-to-NW relay service in S502, the remote LTE may transmit a message (for example, a direct communication request) making a request for the connection of direct communication between UEs with the relay UE to the relay UE in S504. At this time, the remote UE may include a 5G-GUTI which was allocated in advance in the network and a service code indicating a request for the LTE-to-NW relay service.

In S506, the relay UE receiving the direct communication request from the remote UE may identify that the service code corresponds to the request for the UE-to-NW relay service and transmit a message (for example, a relay key request) making a request for authenticating the corresponding service request and a relevant encryption key to the AMF. Further, the relay UE may insert the 5G-GUTI of the remote UE into the relay key request. In S508, the relay AMF may identify whether the relay UE is a UE which has completed the correct authentication.

When the relay AMF receives the 5G-GUTI of the remote UE included in the received relay key request but determines that the remote LTE should perform a re-authentication procedure with the network in S510, the relay AMF may insert reject code information indicating that the remote UE should perform the re-authentication procedure into a response message (for example, a relay key response) of the relay key request and transmit the response message to the relay UE in S512.

Cases in which the relay AMF receives the 5G-GUTI of the remote UE but determines that the remote LTE should perform the re-authentication procedure may include at least one of the following cases.
(1) the case in which it is determined that information on the 5G-GUTI does not follow a value in a correct format,
(2) the case in which no information on the remote AMF which manages the remote UE is found in the 5G-GUTI,
(3) the case in which the remote AMF identified in the 5G-GUTI is not connected,
(4) the case in which information indicating that authentication of the UE is not correct is received from the remote AMF identified in the 5G-GUTI or information indicating that the LTE should perform re-authentication is received for the above reason,
(5) the case in which the AUSF or the UDM which manages authentication of the AMF or the remote UE cannot acquire information related to K _REAR of the UE,
(6) the case in which it is determined that K_REAR information of the LTE is too long and thus an update procedure should be performed, and
(7) the case in which the AMF determines that the corresponding remote LTE should perform a re-authentication procedure for other reasons.

When the relay key response received from the relay AMF includes information on the reject code indicating that the remote UE should perform the re-authentication procedure in S514, the relay LTE may transmit a response message (for example, a direct communication response) including a value corresponding to the corresponding reject code to the remote UE in response to the direct communication request.

In S516, After receiving the reject code from the relay UE, the remote UE may transfer a direct communication request including a 5G subscriber identifier (SUPI or SUCI) of the UE and an indicator related to a communication service between UEs to the relay UE.

In S518, the relay UE receiving the direct communication request from the remote UE may identify that the service code corresponds to the request for the UE-to-NW relay service and transmit a message (for example, a relay key request) requesting for the authentication of the corresponding service request and a relevant encryption key to the relay AMF. Further, the relay UE may include the 5G subscriber identifier of the remote UE received from the remote UE into the relay key request. In S520, the relay AMF may identify whether the relay LTE is a LTE which has completed the correct authentication.

In S522, when the relay LTE is a LTE which is authorized to perform the LTE-to-NW relay operation, the relay AMF receiving the relay key request from the relay UE may transmit the relay key request including the 5G subscriber identifier of the remote UE to the AUSF serving to authenticate the remote LTE. At this time, the relay AMF may request for information on the LTE and acquire the same from the UDM storing subscriber information of the relay LTE in order to identify whether the relay LTE is authorized to perform the LTE-to-NW relay operation. At this time, when discovering the AUSF serving to authenticate the remote UE, the relay AMF may discover (identify) the AUSF serving to authenticate the remote UE by using the 5G subscriber identifier of the remote UE. The AUSF serving to authenticate the remote UE may be an AUSF different from the AUSF serving to authenticate the relay UE. Further, the UDM storing the subscriber information of the remote UE may be a UDM different from the UDM storing the subscriber information of the relay UE.

In S524, the AUSF receiving the relay key request may identify the 5G subscriber identifier of the remote UE and receive SUPI information of the remote UE and a 5G home environment authentication vector (5G HE AV) used to authenticate the remote UE from the UDM. At this time, when the 5G subscriber identifier of the remote UE is encrypted, information on a normal 5G subscriber identifier (SUPI) that is not encrypted may be received from the UDM. Further, the AUSF may generate K_AUSF of the remote UE by using the information received from the UDM.

In S526 to S528, an authentication procedure of the remote UE may be performed. A detailed operation thereof is described below.

The AUSF may transmit a message (for example, an authentication request) including a 5G serving environment authentication vector (5G SE AV) to the relay AMF. The authentication request may be transmitted while being included in a response message of the relay key request or a separate message.

The relay AMF may receive the authentication request from the AUSF and transmit the authentication request including information required for authentication of the UE, such as a RAND and AUTH to the relay UE. The authentication request transmitted to the relay UE may be transmitted while being included in a response message of the relay key request or a separate message.

The relay LTE may transfer the authentication request received from the relay AMF to the remote UE.

The remote UE may perform operations required for network authentication on the basis of information included in the authentication request. At this time, when the network authentication procedure is successful, the remote UE may generate an authentication key (K_AUSF) of the UE on the basis thereof. Further, the remote UE may also generate an encryption key of K_REAR and other encryption keys required for direct communication between UEs by using K_AUSF.

After the operation of the network authentication procedure, the remote UE may transit a response message of the authentication request to the AMF through the relay UE. At this time, the remote UE may insert a value of RES* for identifying whether the remote UE is correctly authenticated in the AUSF into the response message.

After receiving the authentication response message of the remote UE from the relay UE, the relay AMF may transmit the authentication response message to the AUSF. At this time, the relay AMF may insert RES* into the authentication response message and transfer the authentication response message to the AUSF.

The AUSF may calculate the value of RES*, identify whether the response received from the remote UE is appropriate, and determine whether the subscriber UE (remote UE) is successfully authenticated.

In S530, the AUSF may transfer a result of identifying the authentication of the remote UE to the relay AMF. Further, when the remote UE is successfully authenticated, the AUSF may generate the K_REAR of the remote UE and other encryption keys required for the network operation of the remote UE and transfer the generated encryption keys to the relay AMF. In S532, the relay AMF may acquire K_REAR of the remote UE received from the AUSF.

Further, as another embodiment of the disclosure, the AUSF may share K_REAR of the remote UE with the UDM.

In S534, the relay AMF may identify whether the remote UE is a UE which has completed the correct authentication. Thereafter, the relay AMF may identify, from the UDM, information indicating whether the remote UE is authorized to use the UE-to-NW relay service provided by the relay UE and a right to use the same by using the SUPI of the remote UE.

As another embodiment of the disclosure, the relay AMF may receive the value of K_REAR of the remote UE and the value of the K_REAR ID from the UDM.

In S536, the relay AMF may generate (or calculate) a value of K_ProSe to be used for the connection of D2D communication between the relay UE and the remote UE from the value of K_REAR of the remote UE.

When generating K _ProSe, the relay AMF may determine input parameters and input constants input when K _ProSe is generated and generate K _ProSe by using the value and K_REAR of the remote UE. The input parameters input when K_REAR is generated may include at least one of some or all of a random number (RAND) newly determined by the relay AMF, an encryption key number updated whenever K _ProSe is generated, and a subscriber ID of the UE. Further, other values which have not been mentioned above may be included. The input constants input when K _ProSe is generated may be preconfigured between the remote UE and the network, or may include a value or a character string which is negotiated therebetween.

The relay AMF may transfer, in S538, a response message (for example, a relay key response), including a value of the input parameter which has not been negotiated in advance with the remote UE among the input parameters included when K _ProSe is generated, an encryption key identifier (K _ProSe ID) indicating K_ProSe, and a value of K _ProSe, to the relay UE in response to the relay key request.

In S540, the relay UE receiving the relay key response from the relay AMF may directly use the included K _ProSe and K _ProSe ID for encryption and authentication identification of data exchanged in the connection to the remote UE or generate (or store) encryption keys used for encryption and authentication identification of the data.

In S542, the relay UE may transfer a response message (for example, a direct communication response) informing that the requested connection for direct communication between UEs has been successfully established to the remote UE. At this time, the relay LTE may insert input parameters input when K_ProSe is generated and the ID of K_ProSe which are information required by the remote UE for generating K _ProSe in K_REAR into the direct communication response among the information received from the relay AMF.

In S544, the remote UE may generate (or calculate) K _ProSe by using the values received from the relay UE. The remote UE may directly use K_ProSe and the K _ProSe ID to encrypt data exchanged in the connection to the remote LTE and to identify authentication or may generate encryption keys used for encrypting data and identifying authentication.

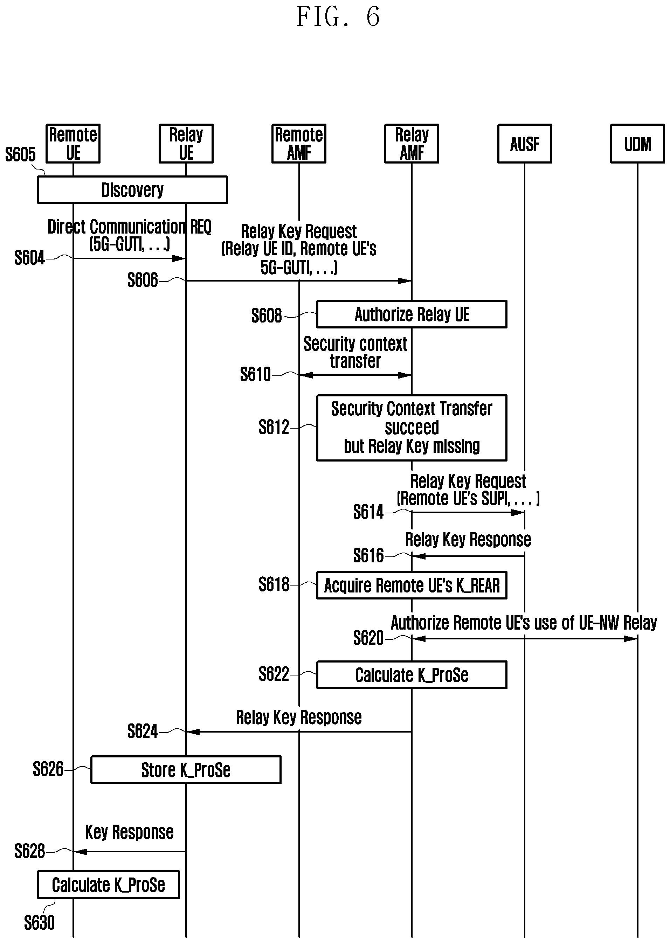

FIG. 6 is a sequence diagram illustrating a procedure of establishing direct connection between UEs and generating an encryption key using a temporary identifier of the UE according to an embodiment of the disclosure.

The remote UE and the relay UE may be authorized in advance for direct communication between UEs, use direct communication between UEs, and receive information, such as a parameter or a policy for the connection to UE-to-NW relay from the network, or relevant information may be preconfigured within the UE. The information may include information such as a service code for using UE-to-NW relay. The relay UE may have preconfigured information required for managing direct communication between UEs. Further, the relay LTE may receive information, such as a parameter or a policy for providing a UE-to-NW relay service from the network through direct communication between UEs with other UEs, or the information may be preconfigured in the UE. The relay UE may announce services provided by the relay UE in a discovery procedure so that other UEs can discover the relay UE to be connected thereto by using preconfigured information.

After the remote UE discovers the relay UE which can provide the UE-to-NW relay service, the remote UE may transmit a message (for example, a direct communication request) making a request for the connection of direct communication between UEs with the relay UE to the relay UE in S602. At this time, the remote UE may insert a 5G-GUTI which was allocated in advance in the network and a service code indicating a request for the UE-to-NW relay service into a direct communication request.

The relay UE receiving the direct comm. request from the remote UE may identify that the service code corresponds to the request for the UE-to-NW relay service and transmit a message (for example, a relay key request) making a request for authenticating the corresponding service request and a relevant encryption key to the AMF. Further, the relay UE may insert the 5G-GUTI of the remote UE into the relay key request.

The relay AMF may identify the remote AMF in which the remote UE is registered by using the 5G-GUTI of the remote UE included in the relay key request and identify whether the remote UE is the UE which has completed the correct authentication from the remote AMF. At this time, the relay AMF may confirm, from the remote AMF, that the remote UE is the UE which has completed the correct authentication but may not receive K_REAR of the remote UE and the value of the K_REAR ID.

When the relay AMF does not receive K_REAR of the remote UE from the remote AMF, the relay AMF may transmit a message (for example, a relay key request) making a request for sharing K_REAR of the remote UE to the AUSF managing authentication of the remote UE by using the SUPI of the remote UE.

The AUSF may generate K_REAR from K_AUSF of the remote UE or transmit stored K REAR to the AMF.

The relay AMF may identify whether the remote UE is a UE which has completed the correct authentication. Thereafter, the relay AMF may identify, from the UDM, information indicating whether the remote UE is authorized to use the UE-to-NW relay service provided by the relay UE and a right to use the same by using the SUPI of the remote UE.

As another embodiment of the disclosure, the AMF may receive the value of K_REAR of the remote UE and the value of the K_REAR ID from the UDM.

The relay AMF may generate (or calculate) a value of K_ProSe to be used for the connection of D2D communication between the relay LTE and the remote UE from the value of K_REAR of the remote UE.

When generating K _ProSe, the relay AMF may determine input parameters and input constants input when K _ProSe is generated and generate K _ProSe by using the value and K_REAR of the remote UE. The input parameters input when K_REAR is generated may include at least one of some or all of a random number (RAND) newly determined by the relay AMF, an encryption key number updated whenever K _ProSe is generated, and a subscriber ID of the UE. Further, other values which have not been mentioned above may be included. The input constants input when K _ProSe is generated may be preconfigured between the remote UE and the network, or may include a value or a character string which is negotiated therebetween.

The relay AMF may transfer a response message (for example, a relay key response), including a value of the input parameter which has not been negotiated in advance with the remote LTE among the input parameters included when K_ProSe is generated, an encryption key identifier (K _ProSe ID) indicating K _ProSe, and a value of K _ProSe, to the relay UE in response to the relay key request.

The relay UE receiving the relay key response from the relay AMF may directly use the included K _ProSe and K _ProSe ID for encryption and authentication identification of data exchanged in the connection to the remote LTE or generate (or store) encryption keys used for encryption and authentication identification of the data.

The relay LTE may transfer a response message (for example, a direct communication response) informing that the requested connection for direct communication between UEs has been successfully established to the remote UE. At this time, the relay UE may insert input parameters input when K_ProSe is generated and the ID of K _ProSe which are information required by the remote LTE for generating K _ProSe in K_REAR into the direct communication response among the information received from the relay AMF.

The remote UE may generate (or calculate) K _ProSe by using the values received from the relay UE. The remote UE may directly use K _ProSe and the K _ProSe ID to encrypt data exchanged in the connection to the remote LTE and to identify authentication or may generate encryption keys used for encrypting data and identifying authentication.

Respective configurations or operations may be selectively combined/mixed in the embodiments or methods described in the disclosure. Further, all the embodiments or methods do not need to necessarily include the described operations according to configurations and/or definition in the system, and some operations may be omitted.

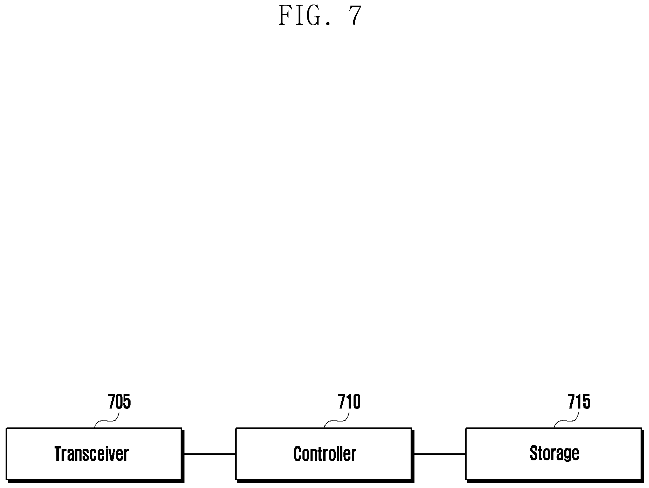

FIG. 7 illustrates a structure of a UE according to an embodiment of the disclosure.

Referring to FIG. 7, the UE may include a transceiver 710, a controller 720, and a storage unit 730. In the disclosure, the controller may be defined as a circuit, an application-specific integrated circuit, or at least one processor. Meanwhile, the UE may be a remote UE or a relay UE performing direct communication between UEs.

The transceiver 710 may transmit/receive a signal to/from another network entity. The transceiver 710 may receive, for example, system information from the BS and receive a synchronization signal or a reference signal. Alternatively, for example, the transceiver 710 may transmit and receive a signal or data for direct communication between UEs.

The controller 720 may control the overall operation of the LTE according to an embodiment proposed in the disclosure. For example, the controller 720 may control the signal flow between blocks to perform the operation according to the above-described flowchart. Specifically, the controller 720 may control the operation proposed in the disclosure to authenticate a network access request through the connection between UEs according to an embodiment of the disclosure.

The storage unit 730 may store at least one piece of information transmitted/received through the transceiver 710 and information generated through the controller 720.

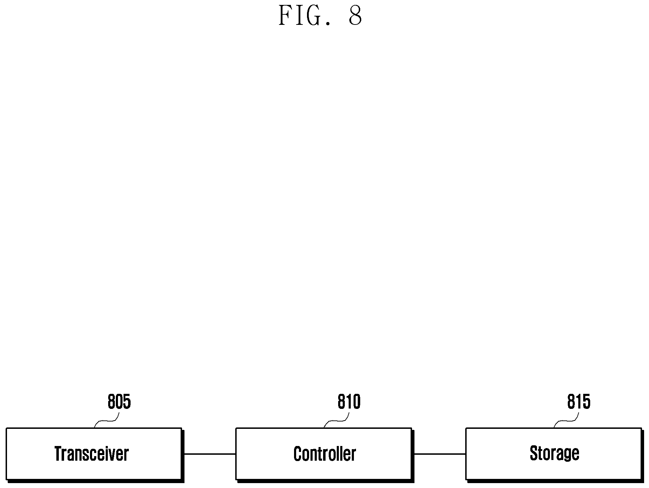

FIG. 8 illustrates a structure of the BS according to an embodiment of the disclosure.

Referring to FIG. 8, the BS may include a transceiver 810, a controller 820, and a storage unit 830. In the disclosure, the controller may be defined as a circuit, an application-specific integrated circuit, or at least one processor.

The transceiver 810 may transmit/receive a signal to/from another network entity. The transceiver 810 may transmit, for example, system information to the UE and transmit a synchronization signal or a reference signal. Further, the transceiver 810 may transmit message transmitted and received between the UE and the AMF.

The controller 820 may control the overall operation of the BS according to an embodiment proposed by the disclosure. For example, the controller 820 may control a signal flow between blocks to perform the operation according to the above-described flowchart. Specifically, the controller 820 may control the operation proposed in the disclosure to authenticate a network access request through the connection between UEs according to an embodiment of the disclosure.

The storage unit 830 may store at least one piece of information transmitted/received through the transceiver 810 and information generated through the controller 820.

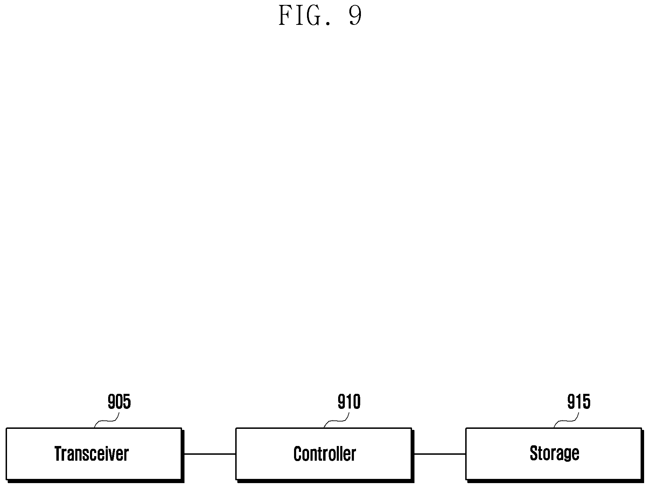

FIG. 9 illustrates a structure of the AMF according to an embodiment of the disclosure.

Referring to FIG. 9, the AMF may include a transceiver 910, a controller 920, and a storage unit 930. In the disclosure, the controller may be defined as a circuit, an application-specific integrated circuit, or at least one processor. Meanwhile, the AMF may be a remote AMF or a relay AMF related to the remote UE or the relay UE performing direct communication between UEs. Alternatively, the AMF may include a SEAF.

The transceiver 910 may transmit/receive a signal to/from another network entity. The transceiver 910 may transmit and receive, for example, a series of messages for authenticating a network access request through the connection between UEs to and from the UE or another core network entity.

The controller 920 may control the overall operation of the AMF according to the embodiment proposed in the disclosure. For example, the controller 920 may control the signal flow between blocks to perform the operation according to the above-described flowchart. Specifically, the controller 920 may control the operation proposed in the disclosure to authenticate a network access request through the connection between UEs according to an embodiment of the disclosure.

The storage unit 930 may store at least one piece of information transmitted/received through the transceiver 910 and information generated through the controller 920.

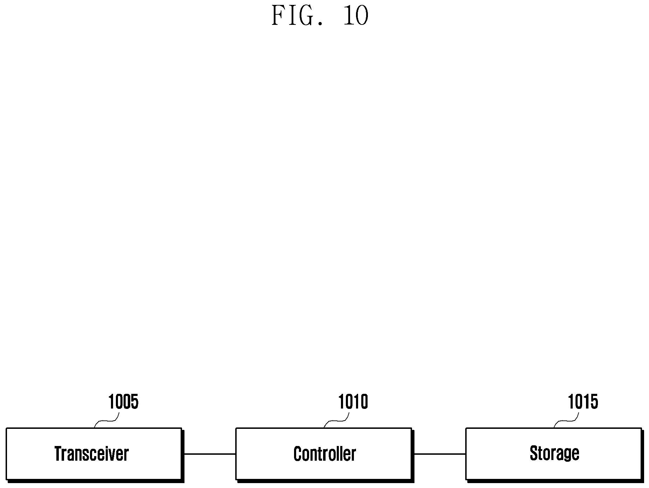

FIG. 10 illustrates a structure of a core network entity according to an embodiment of the disclosure.

Referring to FIG. 10, the core network entity may include a transceiver 1010, a controller 1020, and a storage unit 1030. In the disclosure, the controller may be defined as a circuit, an application-specific integrated circuit, or at least one processor. Meanwhile, the core network entity may be an AUSF or a UDM.

The transceiver 1010 may transmit/receive a signal to/from another network entity. The transceiver 1010 may transmit and receive, for example, a series of messages for authenticating a network access request through the connection between UEs to and from the AMF or another core network entity.

The controller 1020 may control the overall operation of the core network entity according to the embodiment proposed in the disclosure. For example, the controller 1020 may control a signal flow between blocks to perform the operation according to the above-described flowchart. Specifically, the controller 1020 may control the operation proposed in the disclosure to authenticate a network access request through the connection between UEs according to an embodiment of the disclosure.

The storage unit 1030 may store at least one piece of information transmitted/received through the transceiver 1010 and information generated through the controller 1020.

The embodiments of the disclosure described and shown in the specification and the drawings are merely specific examples that have been presented to easily explain the technical contents of the disclosure and help understanding of the disclosure, and are not intended to limit the scope of the disclosure. It will be apparent to those skilled in the art that, in addition to the embodiments set forth herein, other variants based on the technical idea of the disclosure may be implemented.

## Claims

1. A method performed by an access and mobility management function (AMF) in a wireless communication system, the method comprising:
receiving, from a relay user equipment (LTE) for a LTE-network relay communication, a relay key request message including an identifier of a remote UE for the UE-network relay communication;
identifying whether the relay UE is authorized to provide a UE-network relay service;
identifying an authentication server function (AUSF) related to the remote UE, based on the identifier of the remote UE;
transmitting, to the AUSF, an authentication request message including the identifier of the remote UE;
in case that an authentication procedure for the remote LTE based on the identifier of the remote LTE is successfully performed, acquiring a proximity-based services (ProSe) session encryption key established between the remote UE and the relay UE; and
transmitting, to the relay UE, the ProSe session encryption key.

2. The method of claim 1, wherein the identifier of the remote LTE is a subscription concealed identifier (SUCI) of the remote UE.

3. The method of claim 1, wherein an encryption key shared between the remote UE and the AUSF is generated based on the authentication procedure for the remote UE, and
wherein an encryption key for security of direct communication between UEs is generated based on the encryption key shared between the remote UE and the AUSF.

4. The method of claim 3, wherein the ProSe session encryption key is generated based on the encryption key for security of the direct communication between UEs.

5. A method performed by an authentication server function (AUSF) in a wireless communication system, the method comprising:
receiving, from an access and mobility management function (AMF), an authentication request message including an identifier of a remote user equipment (LTE) for a LTE-network relay communication;
acquiring an authentication vector for the remote UE from a unified data management (UDM), based on the identifier of the remote UE;
performing an authentication procedure for the remote LTE, based on the authentication vector; and
generating an encryption key shared between the remote UE and the AUSF, based on the authentication procedure for the remote UE,
wherein the AUSF is related to the remote UE and is identified based on the identifier of the remote UE.

6. The method of claim 5, wherein the identifier of the remote LTE is a subscription concealed identifier (SUCI) of the remote UE.

7. The method of claim 5, wherein an encryption key for security of direct communication between UEs is generated based on the encryption key shared between the remote UE and the AUSF,
wherein the encryption key for security of the direct communication between UEs is used to generate a proximity-based services (ProSe) session encryption key established between the remote LTE and a relay LTE for the LTE-network relay communication, and
wherein the ProSe session encryption key is transmitted to the relay UE.

8. An access and mobility management function (AMF) in a wireless communication system, the AMF comprising:
a transceiver; and
a controller configured to control the transceiver to receive, from a relay user equipment (UE) for a UE-network relay communication, a relay key request message including an identifier of a remote UE for the UE-network relay communication, identify whether the relay UE is authorized to provide a UE- network relay service, identify an authentication server function (AUSF) related to the remote UE, based on the identifier of the remote UE, transmit, to the AUSF, an authentication request message including the identifier of the remote UE, in case that an authentication procedure for the remote UE based on the identifier of the remote UE is successfully performed, acquire a proximity-based services (ProSe) session encryption key established between the remote UE and the relay UE, and control the transceiver to transmit, to the relay UE, the ProSe session encryption key.

9. The AMF of claim 8, wherein the identifier of the remote LTE is a subscription concealed identifier (SUCI) of the remote UE.

10. The AMF of claim 9, wherein an encryption key shared between the remote UE and the AUSF is generated based on the authentication procedure for the remote UE, and
wherein an encryption key for security of direct communication between UEs is generated based on the encryption key shared between the remote UE and the AUSF.

11. The AMF of claim 10, wherein the ProSe session encryption key is generated based on the encryption key for security of the direct communication between UEs.

12. An authentication server function (AUSF) in a wireless communication system, the AUSF comprising:
a transceiver; and
a controller configured to control the transceiver to receive, from an access and mobility management function (AMF), an authentication request message including an identifier of a remote user equipment (UE) for a UE-network relay communication, acquire an authentication vector for the remote UE from a unified data management (UDM), based on the identifier of the remote LTE, perform an authentication procedure for the remote LTE, based on the authentication vector, and generate an encryption key shared between the remote UE and the AUSF, based on the authentication procedure for the remote UE,
wherein the AUSF is related to the remote UE and is identified based on the identifier of the remote UE.

13. The AUSF of claim 12, wherein the identifier of the remote LTE is a subscription concealed identifier (SUCI) of the remote UE.

14. The AUSF of claim 12, wherein an encryption key for security of direct communication between UEs is generated based on the encryption key shared between the remote UE and the AUSF.

15. The AUSF of claim 14, wherein the encryption key for security of the direct communication between UEs is used to generate a proximity-based services (ProSe) session encryption key established between the remote UE and a relay UE for the UE-network relay communication, and
wherein the ProSe session encryption key is transmitted to the relay UE.
